# EUROPÄISCHE PATENTSCHRIFT

(11) **EP 1 191 385 B1**
(45) Veröffentlichungstag und Bekanntmachung des Hinweises auf die Patenterteilung: **29.03.2006**
(21) Anmeldenummer: 01122488.8
(22) Anmeldetag: 20.09.2001
(51) Int. Cl.: G02F 1/13, G02F 1/133

(54) **Flüssigkristall-Anzeige**
Liquid-crystal display
Afficheur à cristaux liquides

(30) Priorität: 25.09.2000 DE 10047694; 22.12.2000 DE 10064767; 07.06.2001 DE 10127490; 22.08.2001 DE 10140175
(43) Veröffentlichungstag der Anmeldung: 27.03.2002
(73) Patentinhaber: SIEMENS AKTIENGESELLSCHAFT, 80333 München (DE)
(72) Erfinder: Brandt, Peter, 63739 Aschaffenburg (DE); Kolibius, Hans, 64832 Babenhausen (DE); Simon, Ernst-Ulrich, 61440 Oberursel (DE); Ritter, Thomas, 63755 Alzenau (DE); Zeiss, Manfred, 65428 Rüsselsheim (DE)

(56) Entgegenhaltungen:
- US-A- 4 738 625
- US-A- 4 773 735
- US-A- 5 886 763
- PATENT ABSTRACTS OF JAPAN vol. 017, no. 231 (P-1532), 11. Mai 1993 (1993-05-11) & JP 04 360125 A (TOSHIBA CORP), 14. Dezember 1992 (1992-12-14)

## Beschreibung

Die Erfindung betrifft eine Flüssigkristall-Anzeige, insbesondere für ein Kraftfahrzeug mit einer Flüssigkristall-Zelle, welche eine elektrische Heizung hat, die durch eine elektrisch leitende Heizschicht auf einem Substrat und zwei an entgegengesetzten Seiten des Substrates über die Breite der Heizschicht führenden Stromschienen gebildet ist, die zur Verbindung mit einer Heizstromquelle jeweils mit einer Kontaktierung versehen sind.

Flüssigkristall-Anzeigen der vorstehenden Art sind derzeit bekannt und gebräuchlich siehe zum Beispiel US 5886763. Die elektrische Heizung ermöglicht es, auch bei niedrigen Temperaturen kurze Schaltzeiten zu erreichen, so dass sich beispielsweise auch DSTN-Zellen für den Einsatz im Kraftfahrzeug eignen. Die beiden Stromschienen, meist Null-Ohm-Schienen genannt, haben die Aufgabe, für einen gleichmäßigen Stromfluss über die gesamte Breite der elektrisch leitenden Heizschicht zu sorgen, so dass sich eine gleichmäßige Erwärmung der Heizschicht und damit der Flüssigkristall-Zelle über ihre gesamte Fläche ergibt.

Es wurde schon versucht, die Kontaktierung der Heizschicht durch an entgegengesetzten Seiten der Heizschicht aufzubringende Stromschienen, an die wiederum ein elektrischer Leiter anzulöten ist, zu bewerkstelligen, was jedoch erhebliche Kosten verursacht und keine dauerhafte Kontaktierung sicherstellt.

Der Erfindung liegt das Problem zugrunde, eine Flüssigkristall-Anzeige der eingangs genannten Art so auszubilden, dass die Mittel zur Kontaktierung ihrer Heizschicht möglichst einfach ausgebildet sind und eine zuverlässige Kontaktierung gewährleisten.

Dieses Problem wird erfindungsgemäß dadurch gelöst, dass die Stromschienen jeweils durch eine zwei Schenkel aufweisende Klammer gebildet sind, welche mit einem Schenkel über das Substrat auf die Heizschicht und mit ihrem anderen Schenkel unter das Substrat greift, und dass zur Verbindung mit der Heizstromquelle ein Federelement zwischen einem Schenkel der Klammer und einer Leiterplatte angeordnet ist.

Eine solche Klammer lässt sich mit geringem Montageaufwand auf das Substrat aufschieben und bildet dort die Stromschienen zur gleichmäßigen Verteilung des elektrischen Stroms. Deshalb kann auf separate Stromschienen in Form von aut die Heizschicht aufgebrachten Leiterbahnen verzichtet werden. Die erfindungsgemäße Klammer kann vorzugsweise aus gleichem Material bestehen wie das gegen sie anliegende Federelement, so dass der Übergang der elektrischen Energie von dem Federelement in die Klammer keine Schwierigkeiten bereitet. Das Substrat kann ein separater Träger oder ein Substrat der Flüssigkristall-Zelle sein.

Eine besonders gleichmäßige Stromverteilung in der die Heizung bildenden Schicht lässt sich erreichen, wenn die Klammer über die gesamte Breite der Heizschicht führt.

Die Klammer lässt sich besonders leicht über den Rand des Substrates schieben, stützt sich jedoch mit ausreichend hoher Vorspannkraft auf der Heizschicht ab, wenn der auf der Heizschicht aufliegende Schenkel der Klammer von der Seite aus gesehen in etwa S-förmig gekrümmt verläuft.

Die Flüssigkristall-Zelle lässt sich mit der montierten Klammer leicht in einen Lichtkasten einer Flüssigkristall-Anzeige einschieben, ohne dass die Gefahr eines Hängenbleibens oder Verhakens besteht, wenn gemäß einer anderen Weiterbildung der Erfindung der untere Schenkel der Klammer als flacher, parallel zu dem Substrat ausgerichteter Steg ausgebildet ist.

Gleichmäßig hohe Andrückkräfte der Klammer über ihre gesamte Breite auf die Heizschicht lassen sich dadurch erreichen, dass der obere Schenkel der Klammer durch eine Vielzahl von nebeneinander verlaufenden Federzungen gebildet ist.

Falls die Flüssigkristall-Anzeige beim späteren Betrieb besonders starken Vibrationen und Erschütterungen ausgesetzt ist, kann man gemäß einer anderen Weiterbildung der Erfindung vorsehen, dass die Klammer auf dem Substrat durch einen Kleber zusätzlich fixiert ist.

Fertigungstoleranzen lassen sich in einem besonders starken Maße ausgleichen, wenn das Federelement eine Schraubenfeder ist, weil diese sich zur Überbrückung von Fluchtungsfehlern nach allen Seiten hin verformen kann. Außerdem stellt die Schraubenfeder eine raumsparende und kostengünstige Kontaktierung dar. Mit einer solchen Ausführung können zudem Aufbautoleranzen in einfacher Weise ausgeglichen werden.

Zur Reduzierung der Teilevielfalt ist es jedoch auch möglich, dass das Federelement durch zumindest einen an der Klammer angeformten Federschenkel gebildet ist, der mit seinem freien Ende mit Vorspannung auf der Leiterplatte aufliegt.

Um eine möglichst einfache Verbindung zu der Heizstromquelle zu erhalten, wird vorgeschlagen, das Federelement durch zumindest eine an der Klammer angeformten Federlasche zu bilden, an deren anderem Ende ein Steckerstift angeformt ist, der in eine Steckerbuchse auf einer Leiterplatine eingesteckt wird.

Damit der elektrische Widerstand möglichst klein ist, wird vorgeschlagen, dass mehrere nebeneinander angeordnete Federlaschen in einen Verbindungssteg übergehen, an dem der Steckerstift angeformt ist. An diesen Verbindungssteg können gleichzeitig senkrecht zum Steckerstift ausgerichtete Eindrücklaschen vorgesehen werden, Diese ermöglichen es, auf den Steckerstift einen ausreichend großen Druck aufzubauen, um ihn in die Steckerbuchse einzuführen.

Bei dieser Anordnung bietet es sich an, dass jede Lasche einem Bogen bildet, dessen Scheitelpunkt von der Klammer entfernt ist. Diese Form lässt sich durch einen einzigen Biegevorgang leicht erreichen. Sie reicht aus, um die zu überbrückenden Toleranzen sicher auszugleichen.

Die Kontaktierung der Klammer mit der Heizschicht soll einerseits einen möglichst kleinen Übergangswiderstand aufweisen. Andererseits soll aber die Aufsteckkraft nicht zu groß sein, weil dies die Heizschicht ggf. zerstören könnte. Es wird daher vorgeschlagen dass der auf der Heizschicht aufliegende Schenkel der Klammer von der Seite betrachtet in einen Doppelbogen mit zwei Auflagepunkten verläuft und dass der untere Schenkel von der Seite betrachtet in einem einfachen Bogen mit einem Kontaktpunkt verläuft, wobei der Kontaktpunkt des unteren Schenkel zwischen den Auflagepunkten des oberen Schenkels liegt.

Aufgrund unterschiedlicher Wärmeausdehnung der Klammer und des Substrats, mit dem die Klammer verbunden ist, kann es bei großen Temperaturschwankungen zu einer Relativbewegung von Klammer und Substrat kommen. Um dieses zu verhindern, ist es vorteilhaft, die Klammer in Längsrichtung in mehrere Segmente aufzuteilen und/oder einzelne Federzungen der Klammer weitestgehend zu trennen (d. h., dass benachbarte Federzungen auf mind. 2/3 ihrer Länge voneinander getrennt sind). Bei Auftrennung der Klammer in mehrere Segmente ist an jedem Segment ein Federelement zur Verbindung mit der Heizstromquelle vorgesehen.

Die Erfindung lässt verschiedene Ausführungsformen zu. Zur weiteren Verdeutlichung ihres Grundprinzips sind drei davon in der Zeichnung dargestellt und werden nachfolgend beschrieben. Diese zeigen in
- Fig. 1: einen schematischen Schnitt durch einen Teilbereich einer Flüssigkristall-Anzeige nach der Erfindung,
- Fig. 2: eine perspektivische Ansicht eines Bereiches der Figur 1,
- Fig. 3: eine perspektivische Ansicht einer zweiten Ausführungsform eines Teilbereiches einer Flüssigkristall-Anzeige,

- Fig. 4: eine perspektivische Ansicht einer dritten Ausführungsform einer Klammer mit einem angeformten Stecker,
- Fig. 5: einen Schnitt durch die Darstellung der Fig. 4.

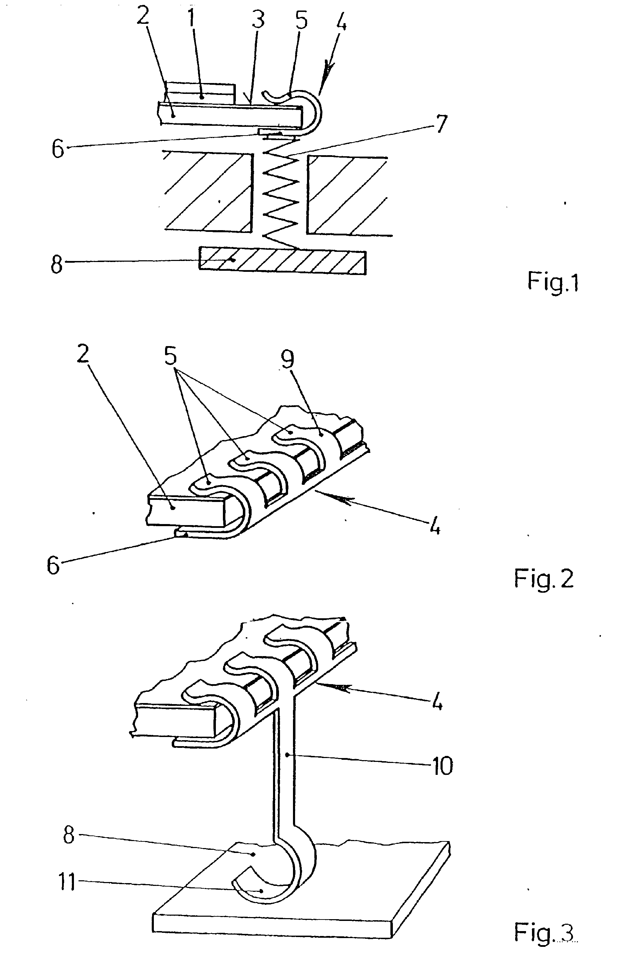

Die Figur 1 zeigt eine Flüssigkristall-Zelle 1, die auf einem eine Heizung bildenden Substrat 2 aufliegt. Das Substrat 2, bei dem es sich normalerweise um eine Glasplatte handelt, hat auf seiner Oberseite eine Heizschicht 3, die durch eine ITO-Schicht gebildet sein kann. Denkbar ist es auch, dass das Substrat 2 durch die unterste Platte der Flüssigkristall-Zelle 1 (oder eine weitere Flüssigkristall-Zelle) gebildet wird, indem die Heizschicht 3 unmittelbar auf dieser Platte aufgebracht wird und beispielsweise die Platte an zwei Seiten die Flüssigkristall-Zelle 1 überragt, so dass dort die Kontaktierung möglich ist.

Zur Kontaktierung der Heizschicht 3 dient eine über das Substrat 2 greifende Klammer 4, welche mit einem S-förmig gekrümmten Schenkel 5 über das Substrat 2 greift und die Heizschicht 3 kontaktiert und einen ebenen Schenkel 6 hat, der von unten her gegen das Substrat 2 anliegt. Gegen diesen ebenen Schenkel 6 stützt sich ein Federelement 7 ab, welches bei dem gezeigten Ausführungsbeispiel als Schraubenfeder ausgebildet ist und das mit seinem anderen Ende gegen eine Leiterplatte 8 anliegt.

Die Figur 2 lässt erkennen, dass der Schenkel 5 der Klammer 4 durch eine Vielzahl einzelner Federzungen 9 gebildet ist.

Bei der Ausführungsform nach Figur 3 wurde auf ein separates Federelement 7 (Figur 1) verzichtet, indem ein Federschenkel 10 an der Klammer 4 angeformt ist. Dieser Federschenkel 10 führt von der Klammer 4 weg zur Leiterplatte 8, auf der er sich mit einem bogenförmig gekrümmten Abstützbereich 11 abstützt.

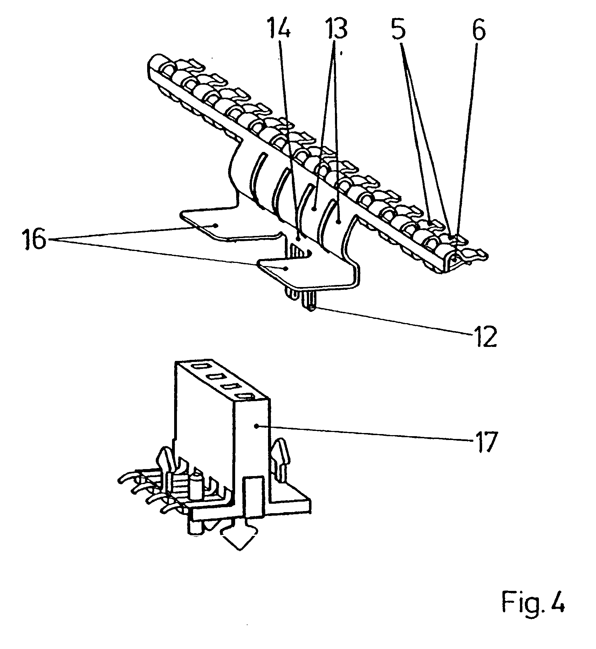

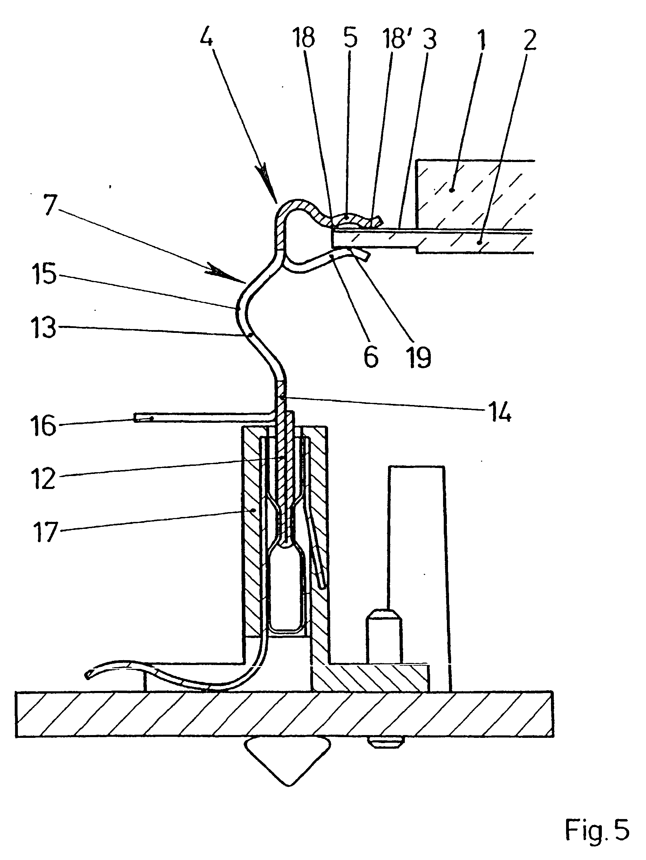

Bei der Ausführungsform nach Figur 4 und 5 wurde ebenfalls auf ein separates Federelement 7 (Figur 1) verzichtet. Vielmehr ist die Klammer 4 einstückig mit dem Federelement und einem mit zwei Kontaktfahnen versehenen Stecker 12 ausgebildet. Das Federelement besteht aus mehreren nebeneinander angeordneten Federlaschen 13, die mit ihren oberen Enden an der Stromschiene der Klammer 4 und mit ihren unteren Enden an einem Verbindungssteg 14 anschließen. Jede Federlasche 13 verläuft von oben nach unten in einem Bogen, dessen Scheitelpunkt 15 von der Klammer 4 entfernt ist. Zum Ausgleich von Toleranzen wird der Bogen entweder gestreckt oder gestaucht.

Von dem Verbindungssteg 14 stehen senkrecht zum Steckerstift 12 zwei Eindrücklaschen 16 ab. Sie sollen das Einführen des Steckerstiftes 12 in eine Buchse 17 auf der Leiterplatte erleichtern. Damit der Steckerstift 12 sicher in der Buchse 17 einrastet, wird auf die Eindrücklaschen 16 von oben ein Druck ausgeübt.

Die Klammer 4 besitzt bei diesem Ausführungsbeispiel eine Vielzahl von aus einem oberen und einem unteren Schenkel 5, 6 gebildeten Paaren, wobei der obere Schenkel 5 jeweils in einem Doppelbogen verläuft und die Heizschicht 3 in zwei Auflagelinien 18, 18' elektrisch und mechanisch kontaktiert, während der korrespondierende untere Schenkel 6 als Einfachbogen ausgeführt ist, der das die Heizschicht 3 tragende Substrat 2 von unten einmal in einer Berührungslinie 19 mechanisch kontaktiert. Die Berührungslinie 19 eines unteren Schenkels 6 liegt dabei jeweils zwischen den Auflagelinien 18, 18' des dazugehörigen oberen Schenkels 5.

## Patentansprüche

1. Flüssigkristall-Anzeige, insbesondere für ein Kraftfahrzeug, mit einer Flüssigkristall-Zelle, welche eine elektrische Heizung hat, die durch eine elektrisch leitende Heizschicht auf einem Substrat und zwei an entgegengesetzten Seiten des Substrates über die Breite der Heizschicht führenden Stromschienen gebildet ist, die zur Verbindung mit einer Heizstromquelle jeweils mit einer Kontaktierung versehen sind, **dadurch gekennzeichnet, dass** die Stromschienen jeweils durch eine zwei Schenkel (5, 6) aufweisende Klammer (4) gebildet sind, welche mit einem Schenkel (5) über das Substrat (2) auf die Heizschicht (3) und mit ihrem anderen Schenkel (6) unter das Substrat (2) greift, und dass zur Verbindung mit der Heizstromquelle ein Federelement (7) zwischen einem Schenkel (6) der Klammer (4) und einer Leiterplatte (8) angeordnet ist.

2. Flüssigkristall-Anzeige nach Anspruch 1, **dadurch gekennzeichnet, dass** die Klammer (4) über die gesamte Breite der Heizschicht (3) führt.

3. Flüssigkristall-Anzeige nach den Ansprüchen 1 oder 2, **dadurch gekennzeichnet, dass** der auf der Heizschicht (3) aufliegende Schenkel (5) der Klammer (4) von der Seite aus gesehen in etwa S-förmig gekrümmt verläuft.

4. Flüssigkristall-Anzeige nach Anspruch 3, **dadurch gekennzeichnet, dass** der untere Schenkel (6) der Klammer (4) als flacher, parallel zu dem Substrat (2) ausgerichteter Steg ausgebildet ist.

5. Flüssigkristall-Anzeige nach zumindest einem der vorangehenden Ansprüche, **dadurch gekennzeichnet, dass** der obere Schenkel (5) der Klammer (4) durch eine Vielzahl von nebeneinander verlaufenden Federzungen (9) gebildet ist.

6. Flüssigkristall-Anzeige nach zumindest einem der vorangehenden Ansprüche, **dadurch gekennzeichnet, dass** die Klammer (4) auf dem Substrat (2) durch einen Kleber zusätzlich fixiert ist.

7. Flüssigkristall-Anzeige nach zumindest einem der vorangehenden Ansprüche, **dadurch gekennzeichnet, dass** das Federelement (7) eine Schraubenfeder ist.

8. Flüssigkristall-Anzeige nach zumindest einem der vorangehenden Ansprüche, **dadurch gekennzeichnet, dass** das Federelement (7) durch zumindest einen an der Klammer (4) angeformten Federschenkel (10) gebildet ist, der mit seinem freien Ende mit Vorspannung auf der Leiterplatte (8) aufliegt.

9. Flüssigkristall-Anzeige nach einem der Ansprüche 1 bis 7, **dadurch gekennzeichnet, dass** das Federelement (7) durch zumindest eine an der Klammer (4) angeformte Federlasche (11) gebildet ist, an deren anderem Ende ein Steckerstift (12) angeformt ist.

10. Flüssigkristall-Anzeige nach einem der Ansprüche 1 bis 7, **dadurch gekennzeichnet, dass** mehrere nebeneinander angeordnete Federlaschen (13) in einen Verbindungssteg (14) übergehen, an dem der Steckerstift (12) und senkrecht zum Steckerstift (12) ausgerichtete Eindrücklaschen (16) angeformt sind.

11. Flüssigkristall-Anzeige nach Anspruch 9 oder 10, **dadurch gekennzeichnet, dass** jede Federlasche (13) einen Bogen bildet, dessen Scheitelpunkt (15) von der Klammer (4) entfernt ist.

12. Flüssigkristall-Anzeige nach einem der vorangehenden Ansprüche, **dadurch gekennzeichnet, dass** der auf der Heizschicht (3) aufliegende Schenkel (5) der Klammer (4) von der Seite betrachtet bogenförmig verläuft und zwei Auflagepunkte oder Auflagelinien (18, 18') an der Heizschicht (3) aufweist und dass der untere Schenkel (6) von der Seite betrachtet in einem einfachen Bogen mit einem Berührungspunkt oder einer Berührungslinie (19) verläuft, wobei dieser bzw. diese zwischen den Auflagepunkten (18, 18') des oberen Schenkels (5) liegt.

13. Flüssigkristall-Anzeige nach einem der vorangehenden Ansprüche, **dadurch gekennzeichnet, dass** die Klammer in Längsrichtung in mehrere Segmente aufgeteilt ist und/oder dass benachbarte Federzungen der Klammer auf mindestens 2/3 ihrer Länge voneinander getrennt sind.

## Claims

1. Liquid crystal display, in particular for a motor vehicle, having a liquid crystal cell having electrical heating formed by an electrically conductive heating layer on a substrate and two busbars which, on opposite sides of the substrate, lead over the width of the heating layer and are in each case provided with a contact connection for connection to a heating current source, **characterized in that** the busbars are in each case formed by a clamp (4) having two limbs (5, 6), one limb (5) of which clamp reaches over the substrate (2) onto the heating layer (3) and the other limb (6) of which clamp reaches under the substrate (2), and **in that**, for connection to the heating current source, a spring element (7) is arranged between one limb (6) of the clamp (4) and a printed circuit board (8).

2. Liquid crystal display according to Claim 1, **characterized in that** the clamp (4) leads over the entire width of the heating layer (3).

3. Liquid crystal display according to Claims 1 and 2, **characterized in that that** limb (5) of the clamp (4) which bears on the heating layer (3) has a profile curved approximately in an S-shaped manner, as seen from the side.

4. Liquid crystal display according to Claim 3, **characterized in that** the lower limb (6) of the clamp (4) is designed as a flat web oriented parallel to the substrate (2).

5. Liquid crystal display according to at least one of the preceding claims, **characterized in that** the upper limb (5) of the clamp (4) is formed by a multiplicity of spring tongues (9) running next to one another.

6. Liquid crystal display according to at least one of the preceding claims, **characterized in that** the clamp (4) is additionally fixed on the substrate (2) by an adhesive.

7. Liquid crystal display according to at least one of the preceding claims, **characterized in that** the spring element (7) is a helical spring.

8. Liquid crystal display according to at least one of the preceding claims, **characterized in that** the spring element (7) is formed by at least one spring limb (10) which is integrally formed on the clamp (4) and whose free end bears with prestress on the printed circuit board (8).

9. Liquid crystal display according to one of Claims 1 to 7, **characterized in that** the spring element (7) is formed by at least one spring lug (11) which is integrally formed on the clamp (4) and on whose other end a plug pin (12) is integrally formed.

10. Liquid crystal display according to one of Claims 1 to 7, **characterized in that** a plurality of spring lugs (13) arranged next to one another merge with a connecting web (14), on which the plug pin (12) and press-in lugs (16) oriented perpendicularly to the plug pin (12) are integrally formed.

11. Liquid crystal display according to Claim 9 or 10, **characterized in that** each spring lug (13) forms an arc whose vertex (15) is remote from the clamp (4).

12. Liquid crystal display according to one of the preceding claims, **characterized in that** that limb (5) of the clamp (4) which bears on the heating layer (3) has an arcuate profile, as viewed from the side, and has two bearing points or bearing lines (18, 18') on the heating layer (3), and **in that** the lower limb (6), as viewed from the side, runs in a single arc with one point of contact or a line of contact (19), said point or line lying between the bearing points (18, 18') of the upper limb (5).

13. Liquid crystal display according to one of the preceding claims, **characterized in that** the clamp is divided into a plurality of segments in the longitudinal direction and/or **in that** adjacent spring tongues of the clamp are separated from one another over at least 2/3 of their length.

## Revendications

1. Afficheur à cristaux liquides destiné, notamment, à un véhicule automobile et qui comporte une cellule à cristaux liquides ayant un chauffage électrique formé par une couche chauffante conductrice de l'électricité placée sur un substrat et deux barres de courant sur des côtés opposés du substrat s'étendant sur toute la largeur de la couche chauffante, ces deux barres de courant étant munies chacune d'un raccordement électrique pour la liaison avec une source de courant de chauffage, **caractérisé par le fait que** les barres de courant sont formées chacune par une agrafe (4) comportant deux branches (5, 6), qui est en prise, par une branche (5), sur la couche chauffante (3) au-dessus du substrat (2) et, par son autre branche (6) au-dessous du substrat (2), et que, pour la liaison avec la source de courant de chauffage, un élément à ressort (7) est disposé entre une branche (6) de l'agrafe (4) et une carte à circuits imprimés (8).

2. Afficheur à cristaux liquides selon la revendication 1 **caractérisé par le fait que** l'agrafe (4) s'étend sur toute la largeur de la couche chauffante (3).

3. Afficheur à cristaux liquides selon les revendications 1 ou 2 **caractérisé par le fait que** la branche (5) de l'agrafe (4) appliquée sur la couche chauffante (3) est, vue de côté, courbée approximativement en forme de S.

4. Afficheur à cristaux liquides selon la revendication 3 **caractérisé par le fait que** la branche inférieure (6) de l'agrafe (4) est conçue comme barrette plate orientée parallèlement au substrat (2).

5. Afficheur à cristaux liquides selon au moins l'une des revendications précédentes **caractérisé par le fait que** la branche supérieure (5) de l'agrafe (4) est formée par une pluralité de languettes à ressort (9) placées l'une à côté de l'autre.

6. Afficheur à cristaux liquides selon au moins l'une des revendications précédentes **caractérisé par le fait que** l'agrafe (4) est fixée en supplément sur le substrat (2) par une colle.

7. Afficheur à cristaux liquides selon au moins l'une des revendications précédentes **caractérisé par le fait que** l'élément à ressort (7) est un ressort à boudin.

8. Afficheur à cristaux liquides selon au moins l'une des revendications précédentes **caractérisé par le fait que** l'élément à ressort (7) est formé par au moins une branche de ressort (10) ménagée sur l'agrafe (4), qui s'applique, sous l'effet d'une force de précontrainte, par son extrémité libre sur la carte à circuits imprimés (8).

9. Afficheur à cristaux liquides selon l'une des revendications 1 à 7 **caractérisé par le fait que** l'élément à ressort (7) est formé par au moins une patte élastique (11) ménagée sur l'agrafe (4) et sur l'autre extrémité de laquelle est ménagée une pointe de contact (12).

10. Afficheur à cristaux liquides selon l'une des revendications 1 à 7 **caractérisé par le fait que** plusieurs languettes à ressort (13) disposées l'une à côté de l'autre se terminent dans une barrette de liaison (14), sur laquelle sont formées la pointe de contact (12) et des languettes à enfoncer (16) orientées perpendiculairement à la pointe de contact (12).

11. Afficheur à cristaux liquides selon la revendication 9 ou 10 **caractérisé par le fait que** chaque patte élastique (13) forme un arc dont le sommet (15) est éloigné de l'agrafe (4).

12. Afficheur à cristaux liquides selon l'une des revendications précédentes **caractérisé par le fait que**, vue par le côté, la branche (5) de l'agrafe (4) qui s'appuie sur la couche chauffante (3) est en forme d'arc et a deux points d'appui ou lignes d'appui (18, 18') sur la couche chauffante (3) et que la branche inférieure (6), vue par le côté, forme un arc simple avec un point de contact ou une ligne de contact (19), ce dernier ou cette dernière se trouvant entre les points d'appui (18, 18') de la branche supérieure (5).

13. Afficheur à cristaux liquides selon l'une des revendications précédentes **caractérisé par le fait que** l'agrafe est partagée, dans le sens longitudinal, en plusieurs segments et / ou que des languettes à ressort de l'agrafe voisines l'une de l'autre sont séparées l'une de l'autre sur au moins 2/3 de leur longueur.
